# EUROPÄISCHE PATENTSCHRIFT

(11) **EP 0 602 330 B1**
(45) Veröffentlichungstag und Bekanntmachung des Hinweises auf die Patenterteilung: **14.02.1996**
(21) Anmeldenummer: 93115160.9
(22) Anmeldetag: 20.09.1993
(51) Int. Cl.: B60G 15/06, F16F 1/38

(54) **Axial auf Zug und/oder Druck belastbares Dämpferlager**
Damper support loaded axially during expansion and/or compression
Support d'amortisseur chargé axialement en traction et/ou compression

(30) Priorität: 18.12.1992 DE 4242954
(43) Veröffentlichungstag der Anmeldung: 22.06.1994
(73) Patentinhaber: Volkswagen Aktiengesellschaft, D-38436 Wolfsburg (DE)
(72) Erfinder: Hoppmann, Helmut, D-38126 Braunschweig (DE); Winter, Ingo, Dipl.-Ing., D-38550 Isenbüttel (DE)

(56) Entgegenhaltungen:
- EP-A- 0 226 832
- EP-A- 0 352 184
- EP-A- 0 494 393
- DE-A- 2 626 392
- FR-A- 2 369 942
- FR-A- 2 535 259
- US-A- 3 037 787
- REVUE TECHNIQUE AUTOMOBILE Bd. 32, Nr. 371 , Oktober 1977 , BOULOGNE-BILLANCOURT FR Seiten 55 - 58 'suspension PEUGEOT "104" : CONSEILS PRATIQUES'

## Beschreibung

Die Erfindung bezieht sich auf ein axial auf Zug und/oder Druck belastbares sowie in beschränktem Maße kardanische Bewegungen ermöglichendes Dämpferlager der im Oberbegriff des Patentanspruchs 1 genannten Art, wie es beispielsweise aus der FR 2 535 259-A1 oder aus der Zeitschrift "Revue Technique Automobile", Bd 32 Nr. 371, Oktober 1977, S. 55, bekannt ist.

Die Anbindung der Kolbenstange eines Teleskop-Stoßdämpfers am Aufbau eines Kraftfahrzeugs mit Hilfe elastischer Dämpferlager erfolgt üblicherweise, und zwar unabhängig davon, ob der Teleskop-Stoßdämpfer Teil eines Federbeins oder Federdämpfers ist oder aber als eigenständiges Bauelement wirkt, um beim Ein- und Ausfedern des Rades bzw. beim Ein- und Austauchen der Kolbenstange in das Behälterrohr des Teleskop-Stoßdämpfers einerseits zumindest in beschränktem Maße möglichst leichtgängige kardanische Bewegungen der Kolbenstange zu ermöglichen und andererseits um zu verhindern, daß durch in der Kolbenstange auftretende axiale Zug- und Druckkräfte bewirkte Erschütterungen bzw. Vibrationen und/oder Geräusche auf den Fahrzeugaufbau bzw. in den Fahrgastinnenraum übertragen werden.

Vorwiegend werden hierfür Dämpferlager eingesetzt, bei denen die kardanische Beweglichkeit sowie die Dämpfung der Erschütterungen, Vibrationen und Geräusche ausschließlich über gummielastische Elemente bewirkt werden, wie sie beispielsweise auch aus der DE 78 18 309-U1, DE 78 23 305-U1 oder der EP 0 226 832-A1 bekannt sind.

Bei der Auslegung von Kraftfahrzeugen, insbesondere von Personenkraftwagen, ist man aus Komfortgründen an möglichst langen Dämpferwegen, d. h. an möglichst großen Ein- bzw. Austauchwegen der Kolbenstange interessiert. Dem stehen jedoch häufig beschränkte Einbauverhältnisse entgegen, die zu Kompromissen bezüglich der Dämpferwege zwingen.

Vor diesem Hintergrund liegt der Erfindung nun die Aufgabe zugrunde, ein Dämpferlager der im Oberbegriff des Patentanspruchs 1 genannten Art derart weiter zu verbessern, daß bei vorgegebenem Einbauraum einerseits vergleichsweise große Dämpferwege, und andererseits leichtgängigere kardanische Bewegungen ermöglicht werden.

Diese Aufgabe wird erfindungsgemäß durch die Merkmale des Patentanspruchs 1 gelöst. Eine vorteilhafte Weiterbildung und Ausgestaltung der Erfindung ist im Unteranspruch angegeben.

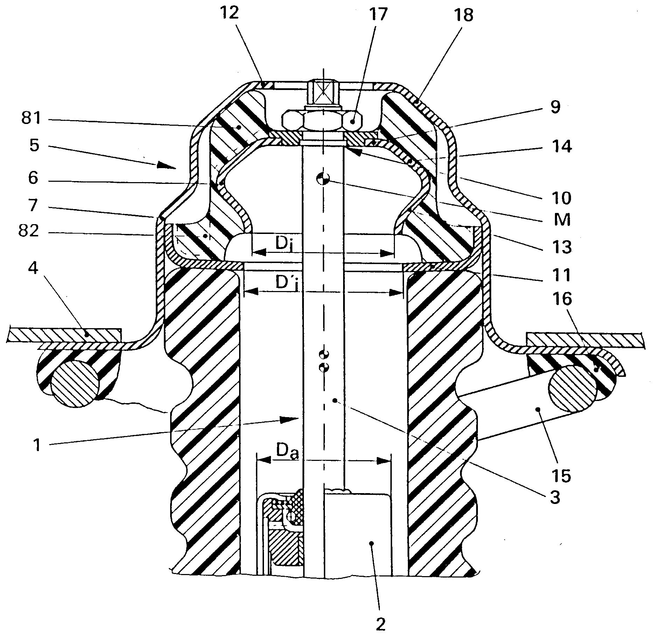

Anhand eines in der Zeichnung dargestellten Ausführungsbeispieles wird die Erfindung nachstehend näher erläutert.

Die einzige Figur der Zeichnung zeigt in teilgeschnittener Darstellung den aufbauseitigen Teil eines Federbeins oder Federdämpfers, dessen in üblicher Weise von einer der Fahrzeugfederung dienenden Schraubenfeder 15 umschlossener Teleskop-Stoßdämpfer mit 1 beziffert ist.

Während sich die Schraubenfeder 15 mit ihrem aufbauseitigen Ende über eine gummielastische Federunterlage 16 unmittelbar am nur angedeuteten Fahrzeugaufbau 4 abstützt, ist das freie Ende der in das Dämpferrohr 2 ein- und austauchenden Kolbenstange 3 des Teleskop-Stoßdämpfers 1 am Aufbau 4 unter Zwischenschaltung eines axial auf Zug und/oder Druck belastbaren sowie in beschränktem Maße kardanische Bewegungen ermöglichenden elastischen Dämpferlagers 5 angelenkt.

Dieses Dämpferlager enthält im wesentlichen ein mit dem Kolbenstangenende mittels einer Schraubvorrichtung 17 verbundenes Lagerinnenteil 6 sowie ein dieses Lagerinnenteil mit Abstand umschließendes Lageraußenteil 7, welches in üblicher Weise, z. B. ebenfalls mittels Schraubvorrichtungen, am Fahrzeugaufbau 4 befestigbar ist.

Das Lagerinnenteil ist als zum Dämpferrohr 2 hin offener erster Lagertopf 6 ausgebildet, dessen Topfboden 9 eine zentrische Öffnung 10 zum Befestigen der Kolbenstange 3 aufweist.

Der Innenraum des ersten Lagertopfes 6 ist derart bemessen, daß das Dämpferrohr 2 beim Einfedern des Rades bzw. beim Eintauchen der Kolbenstange 3 in das Dämpferrohr ins Dämpferlager 5 bis zur körperlichen Anlage an den Topfboden 9 eindringen kann. Die mit Dᵢ bezifferte Lichte Weite des ersten Lagertopfes ist also bis zum Topfboden 9 hin jeweils mindestens etwas größer bemessen als der Außendurchmesser Dₐ des ihm benachbarten Endbereichs des Dämpferrohrs 2.

Das Lageraußenteil ist als den ersten Lagertopf 6 sowohl in dessen Boden- als auch in dessen Wandbereich mit Abstand umschließender zweiter Lagertopf 7 ausgebildet, der in einem gewissen axialen Abstand unterhalb des ersten Lagertopfs 6 einen radial nach innen vorspringenden Innenflansch 11 besitzt. Auch die Lichte Weite Dᵢ' des Innenflansches 11 ist zumindest etwas größer bemessen als der Außendurchmesser Dₐ des ihm benachbarten Endbereichs des Dämpferrohrs 2.

Der erste Lagertopf 6 ist als stark nach außen ausgebauchter Topf mit planem Topfbodenbereich ausgebildet. Er besitzt also einen an den planen Topfboden 9 anschließenden, sich radial bis zu einem größten Durchmesser erweiternden oberen ersten Topfwandbereich 14 und einen daran anschließenden, sich radial wieder verringernden unteren zweiten Topfwandbereich 13, der in einen daran anschließenden etwa zylindrischen Topfrandbereich endet. Dieser zweite Topfwandbereich bildet somit einen den Innenflansch 11 zumindest teilweise radial übergreifenden Bereich.

Die beiden Lagertöpfe 6 und 7 sind durch gummielastische Elemente miteinander verbunden. Ein während der Druckphase des Teleskop-Stoßdämpfers auf Druck beanspruchter oberer erster ringförmiger Gummikörper 81 ist im Bereich bzw. im Nahbereich der beiden Topfböden 9, 12 angeordnet und radial so nah wie möglich an die dort nach außen hindurchtretende Kolbenstange 3 herangerückt, so daß er einen vergleichsweise kleinen mittleren Ringdurchmesser besitzt.

Ein während der Zugphase des Teleskop-Stoßdämpfers im wesentlichen auf Druck beanspruchter unterer zweiter ringförmiger Gummikörper 82 ist zwischen dem radial nach innen ragenden Innenflansch 11 des zweiten Lagertopfes 7 und den diesen Innenflansch zumindest teilweise radial übergreifenden unteren zweiten Topfwandbereich 13 des ersten Lagertopfes 6 angeordnet. Der mittlere Ringdurchmesser dieses radial weiter außen liegenden zweiten Gummikörpers 82 ist somit größer als der des ersten Gummikörpers 81.

Durch die nach unten weit geöffnete topfförmige Ausbildung des Lagerinnenteils kann das Dämpferrohr 2 beim Einfedern des Rades so weit nach oben einfahren, daß es am Topfboden 9 des ersten Lagertopfs 6 zur Anlage kommt.

Im Gegensatz zu bekannten Anordnungen wird praktisch der gesamte axial zur Verfügung stehende Bauraum als Dämpferweg ausgenutzt. Bei bekannten Anordnungen wird dagegen ein Teil dieses axialen Bauraums benötigt, um entweder (z. B. FR 2 535 259-A1 oder "Revue Technique Automobile") einen axialen elastischen Anschlagpuffer oder aber (z. B. DE 78 18 309-U1, DE 78 23 305-U1) um sowohl einen elastischen Anschlagpuffer als auch die gummielastischen Elemente des Dämpferlagers selbst unterzubringen.

Daß das Dämpferrohr 2 beim Einfedern des Rades am Topfboden 9 des ersten Lagertopfes zur Anlage kommen kann, ist in keiner Weise nachteilig, da die Abstützung des Dämpfers ja auch dann noch nicht hart, sondern über den ersten ringförmigen Gummikörper 81 erfolgt.

Da sich das Dämpferrohr 2 somit beim maximalen Einfedern der Kolbenstange 3 unmittelbar am Lagerinnenteil 6 abstützt und nicht wie sonst allgemein üblich über irgendwelche zwischengeschaltete gummielastische Elemente, kann in vorteilhafter Weise zusätzlich noch dadurch Dämpferweg gewonnen werden, daß darauf verzichtet wird, im Dämpferrohrinneren konstruktiv einen mindestens 10 mm großen Sicherheitsabstand zwischen dem Bodenventil und dem maximal eingefahrenen Kolben vorzusehen, wie dies sonst allgemein üblich ist. Eine Beschädigung des Bodenventils kann bei der erfindungsgemäßen Ausbildung des Dämpferlagers nämlich bereits mit sehr viel kleineren Sicherheitsabständen von z. B. nur 1 mm sichergestellt werden.

Dadurch, daß der obere, d. h. der erste ringförmige Gummikörper 81 radial so nah wie möglich an die Kolbenstange 3 herangerückt wird, wird vermieden, daß beim Einfedern des Rades bzw. beim Eintauchen der Kolbenstange 3 in das Dämpferrohr 2, was ja stets mit einer gewissen Schwenkbewegung des Teleskop-Stoßdämpfers 1 um den wirksamen, mit M angedeuteten Lagerschwenkpunkt einhergeht, vom oberen Gummikörper 81 größere Rückstellmomente auf die Kolbenstange 3 ausgeübt werden können, da ja der mittlere Ringdurchmesser dieses Gummikörpers 81 bewußt vergleichsweise klein gehalten ist.

Die beim Ausfedern des Rades, d. h. in der Zugphase des Teleskop-Stoßdämpfers 1 infolge der damit verbundenen Schwenkbewegung über den dabei auf Druck beanspruchten unteren , d. h. den zweiten ringförmigen Gummikörper 82 ausgeübten Rückstellmomente auf die Kolbenstange 3 sind dagegen trotz des größeren mittleren Ringdurchmessers dieses Gummikörpers von vorn herein vergleichsweise klein, weil die während der Zugphase des Teleskop-Stoßdämpfers auftretenden Dämpferkräfte grundsätzlich wesentlich niedriger sind als in der Druckphase.

Die oberen, d. h. die topfbodenbenachbarten Topfwandbereiche 14 und 18 der beiden Lagertöpfe 6 und 7 sind jeweils zumindest annähernd kugelschalenförmig, d. h. zum Dämpferrohr hin abfallend ausgebildet, wodurch bei einer Winkelbewegung in vorteilhafter Weise die Druckanteile im Gummi reduziert und die Schubanteile vergrößert werden, so daß die Leichtgängigkeit von kardanischen Bewegungen verbessert wird (Schub ist weicher als Druck).

Die gummielastischen Elemente von Dämpferlagern werden im allgemeinen bevorzugt am metallischen Lagerinnen- und Lageraußenteil anvulkanisiert. Dieser Vulkanisiervorgang wird um so aufwendiger und damit um so teurer je voluminöser die jeweiligen Bauteile sind.

Beim erfindungsgemäßen Dämpferlager ist es in vorteilhafter Weise möglich, den mit der Vulkanisation zusammenhängenden Aufwand dadurch zu verringern, daß der erste Lagertopf 6, die beiden ringförmigen Gummikörper 81, 82 und der Innenflansch 11 des zweiten Lagertopfs 7 zu einer vorgefertigten Baueinheit zusammengefaßt werden, bei der der obere ringförmige erste Gummikörper 81 am ersten Lagertopf 6, und zwar an dessen oberen Wandbereich 14 anvulkanisiert ist und der untere zweite ringförmige Gummikörper 82 einerseits am unteren zweiten Topfwandbereich 13 des ersten Lagertopfes 6 und andererseits am Innenflansch 11. Diese Baueinheit ist vom Volumen her vergleichsweise klein und läßt sich daher mit nur geringem Aufwand vulkanisieren. Diese vorgefertigte Baueinheit wird dann einfach in den zweiten Lagertopf 7 eingeschoben bzw. eingedrückt, und zwar solange, bis der obere erste ringförmige Gummikörper 81 am oberen Topfwandbereich 18 des zweiten Lagertopfes 7 anliegt, wobei gleichzeitig zumindest eine kraftschlüssige Preßverbindung zwischen dem Außenumfang des Innenflansches 11 und dem zweiten Lagertopf 7 hergestellt wird. In vielen Fällen wird diese Preßverbindung durchaus ausreichen. Ansonsten kann die Verbindung zwischen Lagertopf 7 und Innenflansch 11 in einfacher Weise durch zusätzlichen Formschluß wie z. B. Eindrückungen o. ä. oder durch den einen oder anderen entlang dem Umfang hergestellten Schweißpunkt im erforderlichen Umfang verstärkt werden.

### BEZUGSNUMMERNLISTE

- 1: Teleskop-Stoßdämpfer
- 2: Dämpferrohr
- 3: Kolbenstange
- 4: Aufbau
- 5: Dämpferlager
- 6: Lagerinnenteil, erster Lagertopf
- 7: Lageraußenteil, zweiter Lagertopf
- 81: erster ringförmiger Gummikörper
- 82: zweiter ringförmiger Gummikörper
- 9: Topfboden des ersten Lagertopf
- 10: zentrische Öffnung
- 11: Innenflansch
- 12: Topfboden des zweiten Lagertopfs
- 13: unterer zweiter Topfwandbereich; den Innenflansch radial übergreifender Bereich des ersten Lagertopfs
- 14: oberer erster Topfwandbereich
- 15: Schraubenfeder
- 16: gummielastische Federunterlage
- 17: Schraubvorrichtung
- 18: oberer Topfwandbereich des zweiten Lagertopfes
- M: Lagerschwenkpunkt
- Dᵢ: Lichte Weite des ersten Lagertopfs
- Di': Lichte Weite des Innenflansches
- Dₐ: Außendurchmesser des Dämpferrohrs

## Patentansprüche

1. Axial auf Zug und/oder auf Druck belastbares sowie in beschränktem Maße kardanische Bewegungen ermöglichendes Dämpferlager (5) zur Anlenkung des freien Endes einer in das Dämpferrohr (2) eines Teleskop-Stoßdämpfers (1), insbesondere eines Federdämpfers oder Federbeins ein- und ausfahrenden Kolbenstange (3) an ein tragendes Bauteil, insbesondere an den Aufbau (4) eines Kraftfahrzeugs,
mit einem am Kolbenstangenende befestigbaren Lagerinnenteil in Form eines zum Dämpferrohr (2) hin offenen ersten Lagertopfs (6), dessen lichte Weite (Dᵢ) bis zum kreisscheibenförmigen planen Topfboden (9) hin zumindest etwas größer ist als der Außendurchmesser (Dₐ) des ihm benachbarten Endbereichs des Dämpferrohrs (2), wobei der Topfboden (9) eine zentrische Öffnung (10) zur Befestigung der Kolbenstange (3) aufweist,
mit einem am tragenden Bauteil (4) befestigbaren Lageraußenteil (7) in Form eines den ersten Lagertopf (6) mit Abstand umschließenden, zum Dämpferrohr (2) hin offenen zweiten Lagertopfs mit einem im axialen Abstand unterhalb des ersten Lagertopfs (6) radial nach innen vorspringenden Innenflansch (11), dessen lichte Weite (Dᵢ') ebenfalls zumindest etwas größer ist als der Außendurchmesser (Dₐ) des ihm benachbarten Endbereich des Dämpferrohrs (2), sowie mit einem im Nahbereich der Topfböden (9, 12) zwischen Lagerinnen- und Lageraußenteil (6, 7) angeordneten ersten ringförmigen Gummikörper (81) und einem zwischen Innenflansch (11) einem diesen zumindest teilweise radial übergreifenden Bereich (13) des ersten Lagertopfs (6) angeordneten zweiten ringförmigen Gummikörper (82),
**dadurch gekennzeichnet,**
daß die Kolbenstange (3) in das Dämpferrohr (2) bis zur körperlichen Anlage des Dämpferrohrs (2) am Topfboden (9) des ersten Lagertopfs (6) einfahrbar ist,
daß der erste Lagertopf (6) als stark nach außen ausgebauchter Topf mit einem vom planen Topfboden (9) aus sich zumindest annähernd kugelschalenförmig zu einem größten Durchmesser erweiternden oberen ersten Topfwandbereich (14) und einem daran anschließenden, sich radial wieder verringernden zweiten Topfwandbereich (13) ausgebildet ist, daß auch der zweite Lagertopf (7) in seinem vom Topfboden (12) ausgehenden oberen Topfwandbereich (18) zumindest annähernd kugelschalenförmig ausgebildet ist
und daß der erste ringförmige Gummikörper (81) radial so dicht wie möglich an der zumindest durch den Topfboden (9) des ersten Lagertopfs (6) hindurchtretenden Kolbenstange (3) angeordnet ist und einen deutlich kleineren mittleren Ringdurchmesser aufweist als der zweite ringförmige Gummikörper (82).

2. Dämpferlager nach Anspruch 1,
**dadurch gekennzeichnet,**
daß der erste Lagertopf (6), der Innenflansch (11) des zweiten Lagertopfs (7) und die beiden ringförmigen Gummikörper (81, 82) eine vorgefertigte Baueinheit bilden, wobei der zweite Gummikörper (82) sowohl am Innenflansch (11) als auch am den Innenflansch (11) radial übergreifenden Bereich (13) des ersten Lagertopfs (6) anvulkanisiert ist, während der erste Gummikörper (81) nur am ersten Lagertopf (6) anvulkanisiert ist,
und daß die vorgefertigte Baueinheit unter Herstellung zumindest einer kraftschlüssigen Preßverbindung zwischen Innenflansch (11) und zweitem Lagertopf (7) in den zweiten Lagertopf (7) eingefügt ist.

## Claims

1. Damper support (5) which can be loaded axially during traction and/or compression and which enables a limited degree of cardanic movements for the purpose of coupling the free end of a piston rod (3), which can be moved into and out of the damper tube (2) of a telescopic shock absorber (1), in particular of a shock absorber or a shock absorbing leg, to a supporting component in particular to the body (4) of a motor vehicle,
having a support inner part which can be attached to the piston rod end and which is in the form of a first support cup (6) and is open towards the damper tube (2) and wherein the inside diameter (Dᵢ) of the said first support cup as far as the circular planar cup base (9) is at least somewhat greater than the outer diameter (Dₐ) of the end region immediately adjacent thereto of the damper tube (2), wherein the cup base (9) comprises a central orifice (10) for the purpose of attaching the piston rod (3),
having a support outer part (7) which can be attached to the supporting component (4) and which is in the form of a second support cup which encompasses the first support cup (6) at a spaced disposition and is open towards the damper tube (2) and which second support cup comprises an inner flange (11) which protrudes radially inwards at an axially spaced disposition below the first support cup (6) and the inside diameter (Dᵢ') thereof is likewise somewhat greater than the outer diameter (Dₐ) of the end region immediately adjacent thereto of the damper tube (2),
and furthermore having a first annular rubber member (81), which is disposed in the immediate proximity of the cup bases (9, 12) between the support inner part (6) and the support outer part (7), and a second annular rubber member (82) disposed between the inner flange (11) of a region (13) of the first support cup (6) which at least partially radially overlaps said inner flange,
characterised in
that the piston rod (3) can be moved into the damper tube (2) until the damper tube (2) comes to rest physically on the cup base (9) of the first support cup (6), that the first support cup (6) is formed as a greatly outwardly bulging cup comprising an upper first cup wall region (14), which expands from the planar cup base (9) at least in an almost calotte shell shape to form a greater diameter, and a second cup wall region (13) which is adjacent thereto and reduces again radially,
that in its upper cup wall region (18) starting from the cup base (12) the second support cup (7) is also in the form at least of an approximate calotte shell shape and that the first annular rubber member (81) is disposed radially as close as possible to the piston rod (3) which passes through at least the cup base (9) of the first support cup (6) and comprises a clearly smaller average annular diameter than the second annular rubber member (82).

2. Damper support according to claim 1 characterised in that the first support cup (6), the inner flange (11) of the second support cup (7) and the two annular rubber members (81, 82) form a prefabricated sub-assembly, wherein the second rubber member (82) is moulded-on both at the inner flange (11) and at the region (13) of the first support cup (6) radially overlapping the inner flange (11), whereas the first rubber member (81) is only moulded-on at the first support cup (6),
and that the prefabricated sub-assembly is inserted into the second support cup (7) by producing at least a force-locking pressing connection between the inner flange (11) and the second support cup (7).

## Revendications

1. Support d'amortisseur (5) que l'on peut charger axialement en traction et/ou en compression et qui permet aussi dans certaines limites des mouvements de cardan, pour l'articulation de l'extrémité libre d'une tige de piston, (3) qui peut s'enfoncer dans et sortir d'un tube (2) d'un amortisseur télescopique (1), en particulier d'un amortisseur à ressort ou d'une jambe de force à ressort, sur un élément de construction porteur d'un véhicule à moteur, en particulier sur la carrosserie (4), avec une partie intérieure de support, qui peut être fixée sur l'extrémité de la tige de piston et qui se présente sous la forme d'un premier pot de support (6) ouvert en direction du tube d'amortisseur (2), dont le diamètre intérieur (Dᵢ) jusqu'au fond du pot (9), qui est plan et a la forme d'un disque circulaire, est au moins un peu plus grand que le diamètre extérieur (Dₐ) de la zone terminale du tube de l'amortisseur (12) voisine de celui-ci, le fond du pot (9) présentant une ouverture centrale servant à la fixation de la tige du piston (3), avec une partie extérieure de support (7) qui peut être fixée sur l'élément de construction porteur (4) et qui se présente sous la forme d'un second pot de support, qui entoure à une certaine distance le premier pot de support (6), et est ouvert en direction du tube d'amortisseur (2), avec une bride intérieure (11) qui fait radialement saillie vers l'intérieur à une certaine distance dans le sens axial en-dessous du premier pot de support (6), bride intérieure (11) dont le diamètre intérieur (Dᵢ') est également au moins un peu plus grand que le diamètre extérieur (Dₐ) de la zone terminale voisine du tube d'amortisseur (2), ainsi qu'avec un premier corps en caoutchouc de forme annulaire (81), disposé à proximité des fonds des pots (9, 12) entre la partie intérieure de support et la partie extérieure de support (6, 7) et avec un second corps en caoutchouc de forme anulaire (82), disposé entre la bride intérieure (11) et une zone (13) du premier pot de support (6), qui entoure radialement au moins en partie cette bride intérieure (11), support d'amortisseur caractérisé en ce que la tige de piston (3) peut s'enfoncer dans le tube de l'amortisseur (2) jusqu'à ce que le tube de l'amortisseur (2) vienne en appui matériel sur le fond (9) du premier pot de support (6), en ce que le premier pot de support (6) est constitué sous la forme d'un pot fortement ventru vers l'extérieur avec une première zone supérieure de paroi de pot (14) qui va en s'élargissant à partir du fond de pot, plan, (9), en forme de cuvette sphérique du moins approximativement, prenant son diamètre le plus grand et avec une seconde zone de paroi de pot (13) s'y raccordant, qui va en se réduisant à nouveau radialement, en ce que le second pot de support (7) est aussi constitué dans sa zone supérieure de paroi de pot (18) en partant du fond de pot (12) en forme de cuvette sphérique, du moins de façon approchée, et en ce que le premier corps en caoutchouc de forme annulaire (81) est disposé radialement de façon aussi étanche que possible sur la tige de piston (3), qui passe à travers au moins le fond de pot (9) du premier pot de support (6), et présente un diamètre moyen nettement plus petit que le second corps en caoutchouc de forme annulaire (82).

2. Support d'amortisseur selon la revendication 1, caractérisé en ce que le premier pot de support (6), la bride intérieure (11) du second pot de support (7) et les deux corps en caoutchouc de forme annulaire (81, 82) forment une unité de construction préfabriquée, le second corps en caoutchouc (82) étant vulcanisé aussi bien sur la bride intérieure (11) que sur la zone (13) du premier pot de support (6), qui vient en prise radialement sur la bride intérieure (11), alors que le premier corps en caoutchouc (81) n'est vulcanisé que sur le premier pot de support (6), et en ce que l'unité de construction préfabriquée est insérée dans le second pot de support (7), en réalisant au moins une liaison de serrage par engagement à friction entre la bride intérieure (11) et le deuxième pot de support (7)
